**Europäisches Patentamt**

**European Patent Office**

**Office européen des brevets**

(11) Publication number: **0 018 169**
**A1**

# (12) EUROPEAN PATENT APPLICATION

(21) Application number: **80301149.3**

(22) Date of filing: **10.04.80**

(51) Int. Cl.³: **F 16 K 1/06, F 16 K 17/04, G 05 D 7/00**

(30) Priority: **12.04.79 GB 7912946**

(43) Date of publication of application: **29.10.80**
Bulletin 80/22

(84) Designated Contracting States: **AT BE CH DE FR IT LI LU NL SE**

(71) Applicant: **D.S.B. Valves Limited, 127-135 Merrylee Road, Glasgow. G44 3DL (GB)**
Applicant: **William Broady & Son Limited, English Street, Hull, HU3 2DU (GB)**
Applicant: **Broady-Isolmatic Limited, St. James Street, Hull, UH3 2DU (GB)**

(72) Inventor: **Deane, Moray Palmer, 91 Ormonde Crescent, Glasgow, G44 3SW (GB)**
Inventor: **Griffiths, John Peter, 27 Westfield Park, Elloughton Brough, Hull (GB)**

(74) Representative: **Wotherspoon, Graham et al, FITZPATRICKS 48 St. Vincent Street, Glasgow G2 5TT (GB)**

(54) **Fluid pressure operated valves.**

(57) A fluid pressure operated valve has a valve member (9) movable within a housing (1) between two end positions. In one form of the invention each end position constitutes a valve closing position and springs (12) urge the valve member (9) towards a central position where the valve is open. In another form of the invention one end position constitutes a valve closing position and in the other end position the valve is open, springs (12) urging the valve member (9) towards the other end position. On each side of the valve member (9) is a pressure chamber (13, 14) interconnected by fluid passage means (15).

"Fluid Pressure Operated Valves"                    0018169

DESCRIPTION

This invention relates to fluid pressure operated valves.

According to the invention there is provided a fluid pressure operated valve comprising a housing in which there are two openings about an axis of the housing and spaced apart along the axis, an annular valve seat surrounding at least one of the openings, a valve member movable within and axially of the housing to and from an end position in which the valve member engages the valve seat with one of its opposite faces to close-off fluid flow through the valve, spring means acting between the valve housing and the valve member to urge the valve member towards a position clear of the valve seat in which position there are two pressure chambers in the valve housing divided by the valve member, and fluid passage means communicating between the two pressure chambers for fluid flow in either direction through the valve from one opening, through one pressure chamber, the passage means and the other pressure chamber to the other opening.

In one form of the invention there are annular valve seats surrounding the respective openings, the valve member is movable between two end positions in which the valve member engages the respective valve seats with its opposite faces to close-off fluid flow through the valve and the spring means are operative to urge the valve member towards a central position clear of both valve seats.

Thus, with this form of the invention, in the event of a pipeline failure downstream of the installed valve, the loss of back pressure in the pressure chamber on the downstream side of the valve member causes a sufficient pressure differential to be set up across the valve member to result in the valve member moving in a downstream direction into contact with the downstream valve seat and thus close-off fluid forward flow through the valve. Conversely, in the event of a pipeline failure upstream of the installed valve, the loss of forward pressure in the pressure chamber on the upstream side of the valve member causes a sufficient pressure differential to be set up across the valve member to result in the valve member moving in an upstream direction into contact with the upstream valve seat and thus close-off fluid back flow through the valve.

In another form of the invention there is a single annular valve seat, the valve member is movable between two end positions in the first of which the valve member engages the single valve seat with one of its opposite faces to close-off fluid flow through the valve and in the second of which the valve member engages stop means and the valve is open for fluid flow therethrough, and the spring means are operative to urge the valve member towards the second position.

Thus with this latter form of the invention, and with the valve so installed that the single valve seat is on the downstream side of the valve member, in the event of a pipeline failure downstream of the installed valve, the loss of back pressure in the pressure chamber on the downstream side of the valve member causes a sufficient pressure differential to be set up across the valve member to result in the valve member moving in a downstream direction into contact with the single valve seat and thus close off fluid forward - flow through the valve. Conversely, with the valve so installed that the single valve seat is on the upstream side of the valve member, in the event of a pipeline failure upstream of the installed valve, the loss of forward pressure in the pressure chamber on the upstream side of the valve member causes a sufficient pressure differential to be set up across the valve member to result in the valve member moving in an upstream direction into contact with the single valve seat and thus close-off fluid back flow through the valve.

- 3 -                          0018169

This form of the invention can be used in instances where the risk of failure on one side of the installed valve is minimal such as in direct connection with an appliance in a fluid pressure system, either at the outlet or inlet respectively of the appliance.

Embodiments of the invention will now be described, by way of example, with reference to the accompanying drawings, in which:-

Fig. 1 is an axial section through one embodiment of the invention;

Fig. 2 is an axial section through a modification of the embodiment of Fig. 1 provided with means producing a damping effect on the movement of the valve member;

Fig. 3 is an axial section through another embodiment of the invention;

Fig. 4 is an axial section of a detail of the embodiment of Fig. 3;

Fig. 5 is an end view of the axial section shown in Fig. 4;

Fig. 6 is an axial section of a valve member in a modification of the embodiment of Fig. 3;

Fig. 7 is an end view of the valve member in Fig. 6; and

Fig. 8 is an axial section through a further embodiment of the invention.

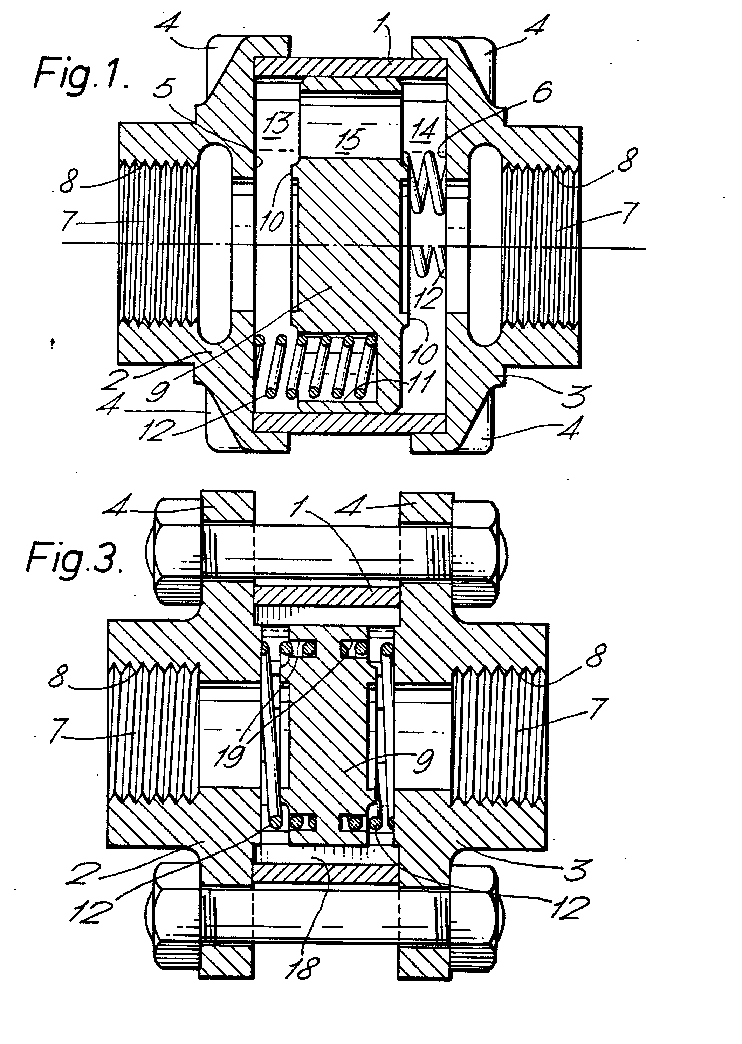

In Fig. 1 a housing is composed of a central cylindrical hollow portion 1 and two end portions 2 and 3 capping-off the ends of the portion 1. The portions 2 and 3 have corner lugs 4 apertured to receive bolts (not shown) by means of which the portions 1, 2 and 3 are held together. The portions 2 and 3 have annular valve seats 5 and 6 respectively disposed axially of the valve and spaced apart along the axis. The valve seats surround openings 7 which are internally screw-threaded at 8 for connecting the valve into a pipeline.

A valve member 9 is slidably movable within and axially of the portion 1 between two end positions in which the valve member engages the respective valve seats 5 and 6 with its opposite faces.

The opposite faces of the valve member 9 are formed with annular ribs 10 to improve sealing contact with the valve seats 5 and 6. Blind holes such as shown at 11 are provided in the valve member 9 from both sides thereof and these blind holes seat compression springs such as 12 urging the valve member towards a central position clear of both valve seats as shown where pressure chambers 13 and 14 are provided divided by the valve member. Passage means for communication between the pressure chambers 13 and 14 are provided in the form of through holes such as 15 in the valve member 9.

With the valve installed in a pipeline and assuming that forward flow is from left to right in Fig. 1 fluid enters the valve through the opening 7 surrounded by the annular seat 5 and passes through the pressure chamber 13, the through holes 15 and the pressure chamber 14 and leaves through the opening surrounded by the annular seat 6. In the event of a pipeline failure downstream of the installed valve, the loss of back pressure in the pressure chamber 14 causes a sufficient pressure differential to be set up across the valve member 9 to result in the valve member moving into contact with the valve seat 6 and thus closing-off fluid forward flow through the valve. Conversely, in the event of pipeline failure upstream of the installed valve, the loss of forward pressure in the pressure chamber 13 causes a differential to be set up across the valve member 9 to result in the valve member moving into contact with the valve seat 5 and thus closing-off fluid back flow through the valve.

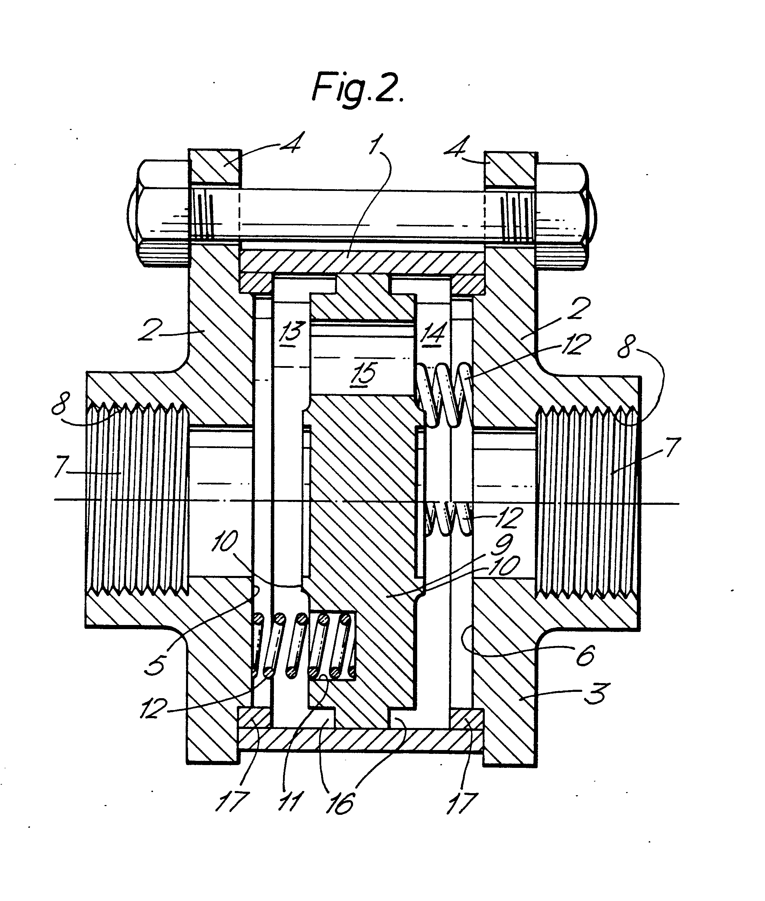

Fig. 2 shows a modification of the embodiment of Fig. 1 in which the valve member 9 has a circumferential recess 16 on each side for co-operation with a circumferential formation 17 projecting from the wall containing each valve seat 5, 6. The formation 17 may be integral with either the portion 2, 3 or the portion 1. Alternatively, the formation 17 may be in the form of a fixed or floating ring.

0018169

Another alternative is to replace the recess 16 by a formation like 17 and the formation 17 by a recess like 16. The purpose of the recess 16 and formation 17 is to permit fluid to be partially trapped on closing movement of the valve member 9 and act as a dashpot to damp the final phase of valve closure.

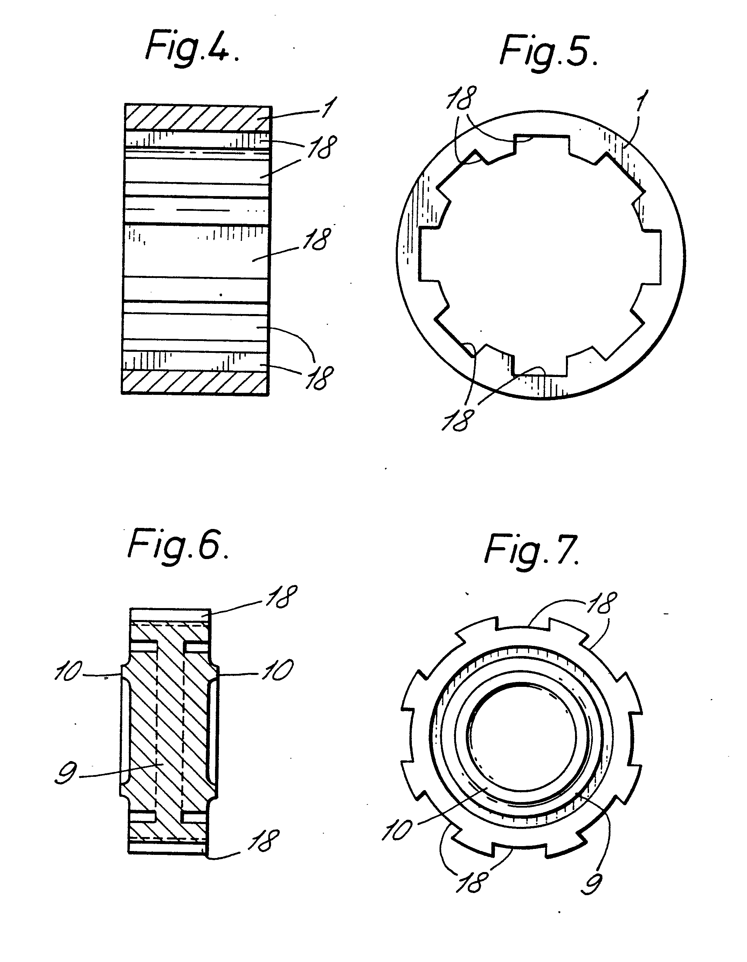

In Figs. 3, 4 and 5 the valve member 9 has no through holes and the passage means are replaced by slots 18 in the inner surface of the portion 1. Furthermore, instead of blind holes in the valve member 9 there is an annular slot 19 in each side of the valve member housing a single axially mounted compression spring 12.

Figs. 6 and 7 show a modification of the embodiment shown in Figs. 3, 4 and 5 wherein the slots 18 are provided in the outer peripheral surface of the valve member 9 instead of in the portion 1.

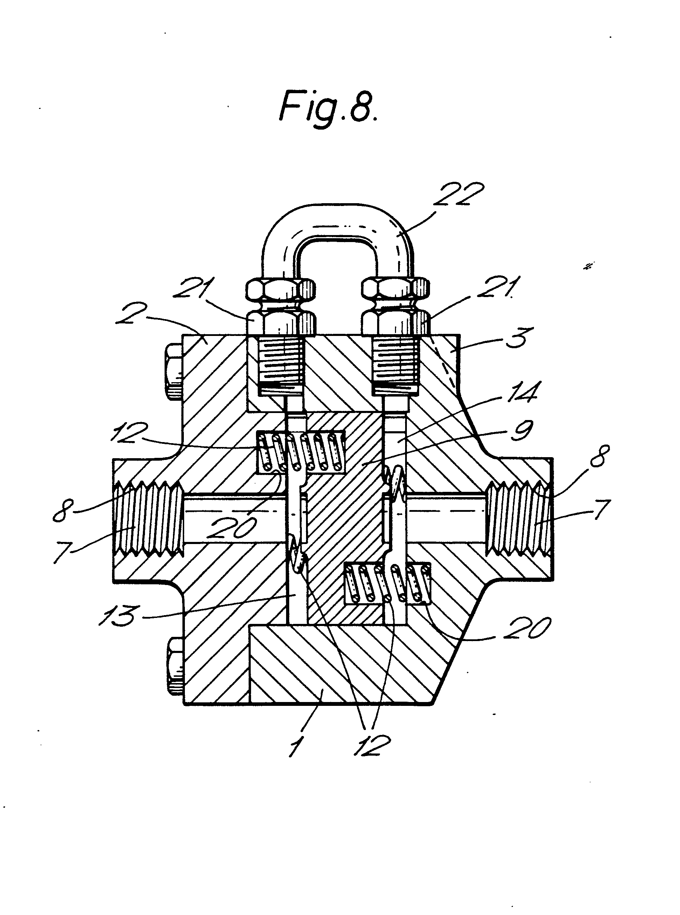

Fig. 8 shows another embodiment which is similar to the embodiment of Figs. 1 and 2 as regards the arrangement of the compression springs 12 except that blind holes 20 are also provided in the portions 2 and 3 for receiving the springs. The embodiment of Fig. 8 also differs in that the portion 1 is integral with the portion 3 and is thicker threadedly to receive two unions 21 interconnected by an external line 22 constituting the passage means interconnecting the pressure chambers 13 and 14. The passage means could alternatively be in the form of borings in the portion 1.

Each of the embodiments described and illustrated operates as a shut-off valve in the event of a pipeline failure both upstream and downstream of the installed valve. Each of the embodiments could however be modified to operate, depending on the way it is installed relative to the normal direction of fluid flow, as a shut-off valve in the event of a pipeline failure either upstream or downstream of the installed valve by the replacement of the springs 12 on one side of the valve member 9 by rigid stop means. In the case of the embodiments in Figs. 1 and 8 the springs 12 could be replaced by

0018169

rigid projections received in the blind holes 11 on one side of the valve member 9. In the embodiment of Fig. 2 the springs 12, the blind holes 11 and the recess 16 on one side of the valve member 12 could be omitted and the formation 17 could be made axially larger. In the embodiments of Figs. 3 to 7 one of the springs 12 could be replaced by a ring received in the recess 19 in one side of the valve member 9. Whatever rigid stop means is used the remaining spring or springs 12 one side of the valve member 9 urges the valve member towards the position shown where the valve is open for fluid flow therethrough. When, due to a pipeline failure, there occurs a drop in pressure in the pressure chamber 13 or 14 occupied by the remaining spring or springs 12 the valve member 9 moves against the spring or springs to close-off fluid flow through the valve.

CLAIMS

1.    A fluid pressure operated valve comprising a
housing in which there are two openings about an axis
of the housing and spaced apart along the axis, an
annular valve seat surrounding at least one of the
openings, a valve member movable within and axially
of the housing to and from an end position in which
the valve member engages the valve seat with one of
its opposite faces to close-off fluid flow through
the valve, spring means acting between the valve
housing and the valve member to urge the valve member
towards a position clear of the valve seat in which
position there are two pressure chambers in the valve
housing divided by the valve member, and fluid passage
means communicating between the two pressure chambers
for fluid flow in either direction through the valve
from one opening, through one pressure chamber the
passage means and the other pressure chamber to the other
opening.

2.    A fluid pressure operated valve according to
claim 1, wherein there are annular valve seats surrounding
the respective openings, the valve member is movable
between two end positions in which the valve member
engages the respective valve seats with its opposite
faces to close-off fluid flow through the valve and
the spring means are operative to urge the valve
towards a central position clear of both valve seats.

3.    A fluid pressure operated valve according to
claim 1, wherein there is a single valve seat, the
valve member is movable between two end positions in
the first of which the valve member engages the single
valve seat with one of its opposite faces to close-off
fluid flow through the valve and in the second of which
the valve member engages stop means and the valve is open
for fluid flow therethrough, and the spring means are
operative to urge the valve member towards the second position.

4.     A fluid pressure operated valve according to claim 1, 2 or 3, wherein the fluid passage means is in the form of through holes in the valve member.

5.     A fluid pressure operated valve according to claim 1, 2 or 3, wherein the fluid passage means is in the form of slots between the inner surface of a portion of the housing surrounding the valve member and the outer peripheral surface of the valve member.

6.     A fluid pressure operated valve according to claim 1, 2 or 3, wherein the fluid passage means is remote from the valve member.

7.     A fluid pressure operated valve according to claim 1, 2 or 3, wherein the housing and the valve member have interengageable circumferential recesses and formations for acting as a dashpot for damping the final phase of movement of the valve member in each direction.

0018169

**Fig.1.**

**Fig.3.**

# Fig.2.

**Fig.4.**

**Fig.5.**

**Fig.6.**

**Fig.7.**

Fig.8.

## DOCUMENTS CONSIDERED TO BE RELEVANT

| Category | Citation of document with indication, where appropriate, of relevant passages | Relevant to claim |
|---|---|---|
| X | US - A - 3 122 162 (A.D. SANDS)  + Totality + | 1,2,4 |
| X | DE - B - 1 209 378 (BROWN BOVERI & CIE)  + Totality + | 1,2,5 |
| X | US - A - 3 561 471 (ASA D. SANDS)  + Totality + | 1,2,4 |
| - | US - A - 3 319 648 (DELTROL CORP.)  + Totality + | 1,4 |
| A | US - A - 2 776 673 (GAR PRECISION PARTS, INC.)  + Totality + | 1 |

**CLASSIFICATION OF THE APPLICATION (Int. Cl. 3)**

F 16 K 1/06
F 16 K 17/04
G 05 D 7/00

**TECHNICAL FIELDS SEARCHED (Int.Cl. 3)**

F 16 K 1/00
F 16 K 17/00
G 05 D 7/00

**CATEGORY OF CITED DOCUMENTS**

X: particularly relevant
A: technological background
O: non-written disclosure
P: intermediate document
T: tneory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| VIENNA | 01-07-1980 | RUMLER |

C Form 1503.1  06.78